# EUROPEAN PATENT SPECIFICATION

(11) **EP 2 105 352 B1**
(45) Date of publication and mention of the grant of the patent: **06.11.2013**
(21) Application number: 08425197.4
(22) Date of filing: 26.03.2008
(51) Int. Cl.: B60R 5/04

(54) **Moveable cargo tray for the trunk of a motor vehicle**
Beweglicher Ladeboden für den Kofferraum eines Kraftfahrzeugs
Plancher porte-charge mobile pour le coffre d'un véhicule à moteur

(43) Date of publication of application: 30.09.2009
(73) Proprietor: Fiat Group Automobiles S.p.A., 10135 Torino (TO) (IT)
(72) Inventor: Tosco, Franco c/o Fiat Group Automobiles S.p.A., 10135 Torino (IT)
(74) Representative: Bergadano, Mirko

(56) References cited:
- EP-A- 1 619 077
- DE-A1- 10 241 687
- DE-A1- 10 261 392
- JP-A- 2003 291 732
- US-A1- 2006 016 840
- US-A1- 2006 197 351
- US-A1- 2006 285 957

## Description

The present invention relates to a moveable cargo tray for the trunk of a motor vehicle.

Motor vehicles are known in which the trunk is provided with a horizontal cargo tray, the height of which can be adjusted from a lowered position adjacent to a bottom surface of the trunk, to a raised position to divide the trunk into an upper space and a lower space.

The cargo tray can then be turned upwards from its horizontal position in order to access the space below it.

In order to hold it at a fixed height, the cargo tray normally carries supporting elements coupled to respective retaining devices, which are attached to the trunk, in particular to the sides, and can be released by means of a direct manual action.

To raise/lower the cargo tray or to turn it upwards, it is first necessary to release the retaining devices by hand, generally first on one side and then on the other side of the trunk, after which the user must take hold of the cargo tray to move it to the desired position.

The need is felt to improve the cargo trays of the known type described above, so that the cargo tray can be moved more easily and more quickly and, preferably, so that the cargo tray can be turned upwards using only one hand.

A moveable cargo tray according to the preamble of claim 1 is known from DE 102 41 687 A1.

The purpose of the present invention is to provide a moveable cargo tray for the trunk of a motor vehicle which fulfils the need described above in a simple and cost-effective manner and is, preferably, less cumbersome.

According to the present invention, a moveable cargo tray for the trunk of a motor vehicle is produced, as defined in claim 1.

In order to better understand the present invention, a non-limiting preferred embodiment thereof will now be described by way of example with reference to the accompanying drawings, in which:
- Figure 1 illustrates in perspective and with parts removed for clarity a preferred embodiment of the moveable cargo tray for the trunk of a motor vehicle according to the present invention;
- Figure 2 is a plan view of the cargo tray of Figure 1;
- Figure 3 is a cross-section along the line III-III of Figure 2, with a component arranged in a different operating position to that shown in Figure 2;
- Figure 4 is similar to Figure 2 and shows the cargo tray with parts removed for clarity;
- Figures 5 and 6 are cross-sections along the lines V-V and, respectively, VI-VI of Figure 2;
- Figure 7 is a plan view on an enlarged scale of a detail of the cargo tray; and
- Figure 8 is a cross-section along the line VII-VII of Figure 7.

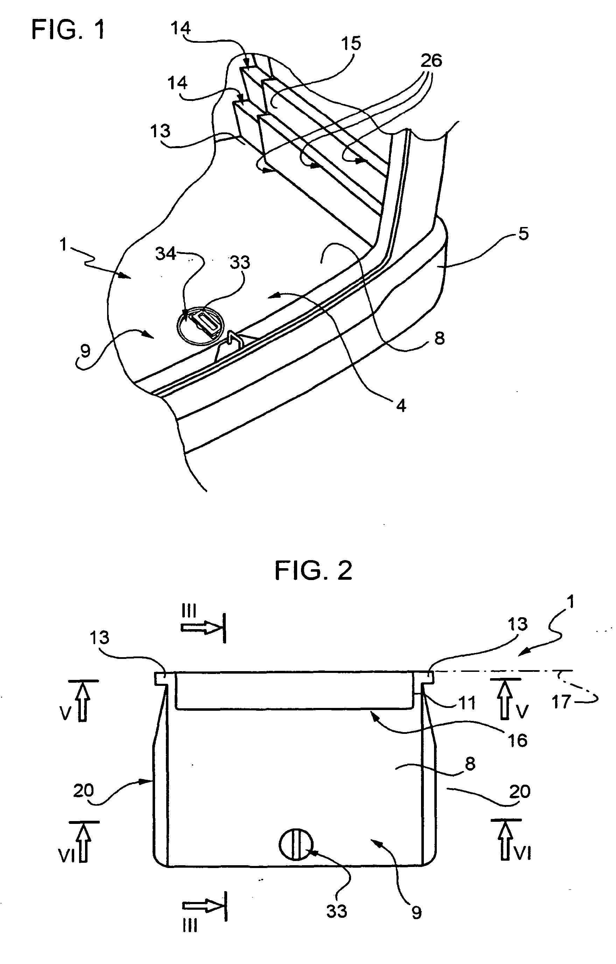

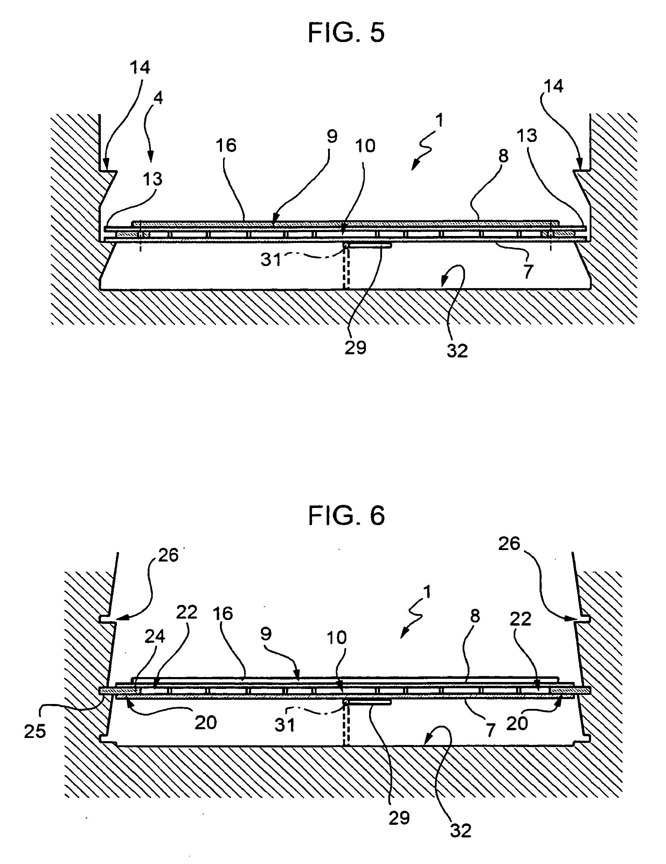

In Figure 1, number 1 indicates, as a whole, a moveable cargo tray for a trunk 4 of a motor vehicle 5. With reference to Figures 5 and 6, the cargo tray 1 is completely housed in the trunk 4 and comprises a lower panel 7 and an upper panel 8, which defines an upper surface 9 on which luggage or other items can be placed. The panels 7,8 are coupled to each other in fixed positions in a way that is not illustrated, and they are parallel and spaced in order to define between them at least one cavity 10.

As visible in Figure 2, the cargo tray 1 comprises a frontal end 11, which terminates laterally with two opposed appendages 13. The appendages 13 rest on respective shelves 14 (Fig. 1) defined by the lining walls 15 of the sides of the trunk 4.

Although conventional hinges are not provided, the fact that the appendages 13 simply rest on the shelves 14 means a user can turn the rear end of the cargo tray 1 upwards, in order to access the space below it and reach the objects placed below the panel 7.

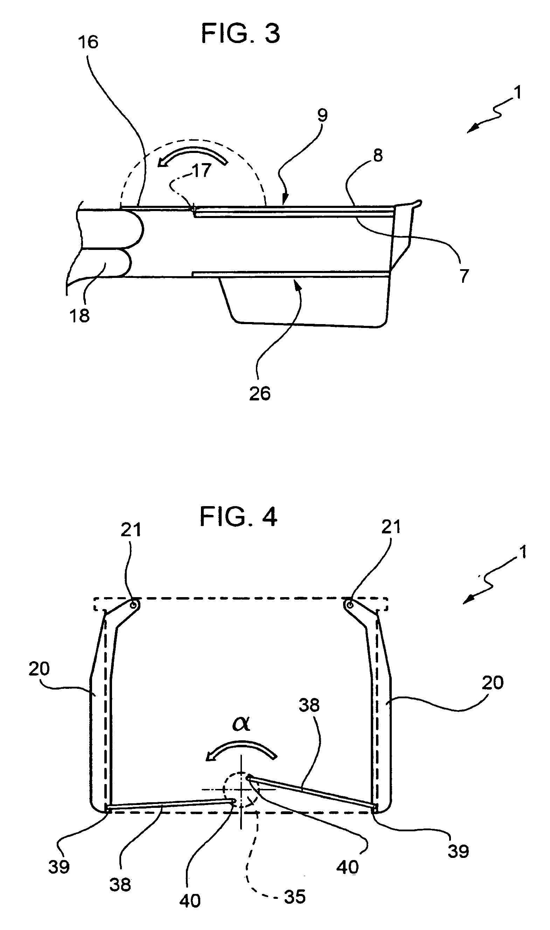

The cargo tray 1 also comprises a flap 16, which is hinged at the end 11 about a horizontal axis 17 so as to pivot between a closed position (Fig. 2), in which it faces the surface 9, and an open position (Fig. 3), in which it projects forwards in a cantilevered fashion in relation to the panel 8, defining an extension of the surface 9 towards the rear seats 18 of the motor vehicle 5, in particular when the backs of the rear seats 18 are down.

According to that illustrated in Figures 2 and 4, the cargo tray 1 comprises two retaining elements 20, which are defined by respective horizontal wings arranged between the panels 7, 8 and along the sides of the cargo tray 1 behind the appendages 13. The elements 20 are hinged at their frontal ends to the end 11, in order to pivot about respective axes 21 orthogonal to the panels 7,8 between an extracted position and a retracted position.

With reference to Figure 6, when they are arranged in the retracted position (not illustrated), the elements 20 are completely housed in respective lateral housings 22 between the panels 7,8. When they are arranged in the extracted position, the elements 20 have respective lateral internal portions 24 arranged in the housings 22 and respective lateral external portions 25, which engage respective seats 26 defined by horizontal notches obtained on the walls 15, and are arranged so as to rest on lower surfaces of the seats 26.

As shown in Figure 6, the depth of the lower surfaces of the seats 26 in a sideways direction, namely in a direction that is horizontal and orthogonal to the longitudinal direction of movement, is less than that of the upper surfaces of the seats 26, in order to leave the longitudinal edge of the lower surfaces uncovered from above and facilitate the supporting and engaging of the elements 20 in the seats 26 when the cargo tray 1 is moved.

In the extracted position, the portions 25 of the elements 20 help to support the loads borne by the surface 9. Preferably, in order to increase the load bearing strength, a supporting element 29 is provided under the panel 7. The element 29 is defined by a wall that is hinged to the panel 7 by means of a hinge in order to pivot by about 90° about a longitudinal axis 31 between a raised position, in which the wall 29 faces the panel 7 and is held in place by a releasable retaining device (not illustrated), and a lowered position, in which it is vertical and defines a beam that supports the panel 7 in relation to the lower bottom surface 32 of the trunk 4.

To remove the cargo tray 1 and/or move the cargo tray 1 between the various seats 26 available in height along the sides of the trunk 4, the appendages 13 must be pulled upwards or downwards by using a free area (Fig. 1) arranged in front of the shelves 14, or by pivoting the cargo tray 1 in the trunk 4 about a longitudinal axis, or by using a free space (not illustrated) that interrupts the length of the seats 26.

The seats 26 are shaped in an appropriate way in order to hold the elements 20, and thus the cargo tray 1, in place, not only in terms of height, but also in relation to the longitudinal direction of movement of the motor vehicle 5, in one direction or in both directions.

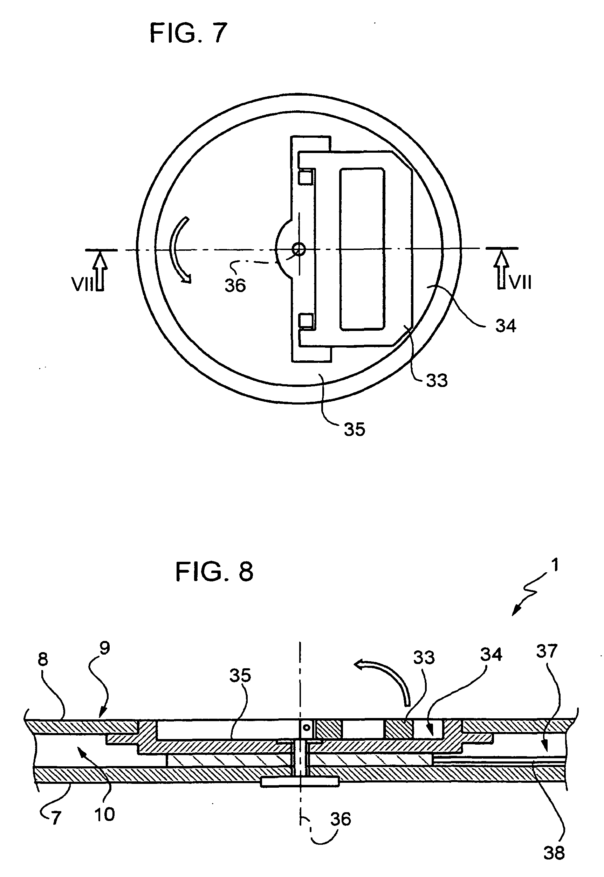

With reference to figures 1 and 8, the cargo tray 1 comprises a handle 33 that is moveable in relation to the panel 8 between a raised position, in which it can be held by a user, and a lowered position, in which it is arranged in a central rear recess 34 under the surface 9. In particular, the handle 33 is hinged to a base 35 about an axis parallel to the surface 9 to pivot between the raised and lowered positions.

Furthermore, the handle 33 is pivotable in relation to the panels 7,8 about an axis 36 parallel to the axes 21 to control the displacement of the elements 20 between the extracted and retracted positions.

In particular, the base 35 is hinged to at least one of the panels 7,8 about the axis 36, so that the handle 33 can rotate (counterclockwise in Figure 4) from a rest position, corresponding to the extracted position of the elements 20, towards a release position, corresponding to the retracted position of the elements 20. In other words, when the handle 33 is turned to the release position the elements 20 move back to leave the seats 26 free. Consequently, it is then possible to pivot the cargo tray 1 upwards, while the appendages 13 continue to rest on the shelves 14, and/or to adjust the height of the cargo tray 1 on the various seats 26 available along the sides of the trunk 4.

A transmission arrangement 37 transfers the motion from the handle 33 to the elements 20. The transmission arrangement 37 is arranged in the cavity 10 and, preferably, comprises a pair of rigid rods 38, which are hinged, at one end, to the elements 20 at points 39 arranged eccentrically in relation to the axes 21, in particular to the rear ends of the elements 20.

At the opposite end, the rods 38 are hinged to the base 35 at points 40 that are diametrically opposite in relation to the axis 36 (Fig. 4). The rods 38 thus act as tie-rods and, respectively, struts when the handle 33 is turned in the two opposite directions.

The operation to adjust the height of the cargo tray 1 is the following.

The user, after lifting the handle 33 from the recess 34, turns the handle 33 to make the elements 20 move back and free the cargo tray 1 from the restraint defined by the seats 26. At this point, the user can turn the cargo tray 1 upwards, continuing to use the same hand that is holding the handle 33, or can also take hold of the cargo tray 1 with the other hand in order to pull the cargo tray 1 out and position it at a different height in the trunk 4.

The supporting points of the appendages 13 on the shelves 14 facilitate the manual operations to be performed to return the elements 20 to an extracted position and block the cargo tray 1 in the new chosen positions. The supporting points of the appendages 13 on the shelves 14 enable the cargo tray 1 to be held in a stable position before returning the handle 33 to a rest position and thus, the elements 20 to an extracted position.

In other words, the user holds the handle 33 with one hand and with the other hand directly holds the panels 7,8 in order to position the cargo tray 1 in the desired position, first resting the appendages 13 on the shelves 14. Once these are supported, the user can let the cargo tray 1 down into a horizontal position using only the hand that is holding the handle 33.

The main advantages of the cargo tray 1 are the following.

The cargo tray 1 is additional to the surface 32 and can be released from/fixed in the trunk 4 and can be moved simply and quickly, using the handle 33.

The dimensions of the cargo tray 1 are relatively limited, thanks to the position of the transmission 37 and of the handle 33, and it has a structure that is extremely suitable for supporting the loads normally carried in the trunk 4, thanks also to the presence of the wall 29 which, where needed, defines an additional supporting beam.

Other advantages derive from the characteristics described above.

Finally, it is clear that modifications and variations can be made to the cargo tray 1 described and illustrated herein without departing from the scope of the present invention as set forth in the appended claims.

In particular, the transmission arrangement 37 could comprise at least one elastic device joined to the handle 33, to the rods 38 and/or to the elements 20 to move the various components to a position of reference corresponding to the extracted position of the elements 20.

The rods 38 can be replaced with flexible cables and springs or by Bowden cables, or by a rope drive; and/or the flap 16 could translate in relation to the panels 7,8, instead of being pivotable.

Furthermore, the elements 20 for example, could be coupled slidingly to the panels 7,8, instead of being hinged.

Finally, the appendages 13 could be absent.

## Claims

1. Moveable cargo tray (1) for a trunk (4) of a motor vehicle (5); the cargo tray comprising:
- a first panel (8) defining an upper surface (9) on which objects can be placed;
- a grip portion (33,35) that a user can take hold of to raise and/or manoeuvre the cargo tray (1) in the trunk (4) ;
- at least two retaining elements (20), which are moveable between an extracted position, in which they project in a cantilevered fashion to engage, in use, relative retaining seats (26), and a retracted position, in which they leave, in use, said retaining seats (26) free; the movements of said retaining elements (20) from the extracted position to the retracted position being controlled together by a movement of said grip portion (33, 35) ;
**characterized in that** said retaining elements (20) are defined by wings parallel to said first panel (8) and arranged along opposite sides of the cargo tray (1) and, in the extracted position, rest on lower surfaces of said seats (26) so as to help to support the loads borne by said upper surface (9).

2. Cargo tray according to claim 1, **characterized by** comprising a transmission (37) to transfer the motion from said grip portion (33, 35) to said wings (20); said transmission being completely arranged under said first panel (7).

3. Cargo tray according to claim 2, **characterized by** comprising a second panel (7) that is fixed to and below said first panel (8); said transmission (37) being arranged between said first and second panels (8,7).

4. Cargo tray according to claim 2 or 3, **characterized in that** said grip portion (33,35) is pivotable about an axis (36) in relation to said first panel (8) from a rest position towards a release position to make said wings (20) retract.

5. Cargo tray according to claim 4, **characterized in that** said transmission (37) comprises at least a rod (38) coupled, at one of its ends, to said grip portion (33, 35) in a position that is eccentric in relation to said axis (36).

6. Cargo tray according to claim 5, **characterized in that** said grip portion (33,35) comprises a base (35) hinged to said first panel (8) about said axis (36), and a handle (33) coupled to said base (35) and moveable in relation to said base (35) between a raised position and a lowered position.

7. Cargo tray according to claim 6, **characterized in that** said handle (35), in the lowered position, is housed in a recess (34) below said upper surface (9).

8. Cargo tray according to claim 3, **characterized in that** said wings (20) are arranged between said first and second panels (8,7).

9. Cargo tray according to anyone of the previous claims, **characterized in that**, when it is arranged in the extracted position, each of said wings comprises:
- an internal portion (24) arranged in a housing (22) defined superiorly by said first panel (8), and
- an external portion (25) that projects with respect to said first panel (8).

10. Cargo tray according to any of the preceding claims, **characterized in that** said first panel (8) comprises a frontal end (11), which terminates laterally with two opposed appendages (13).

11. Cargo tray according to anyone of the previous claims, **characterised in that** said wings (20) are hinged at their frontal ends to a frontal end (11) of said first panel (8), in order to pivot about respective axes (21) orthogonal to said first panel (8) between said extracted and retracted positions.

12. Cargo tray according to anyone of the previous claims, **characterised by** comprising a supporting element (29) located under said first panel (8) and pivotable by about 90° between a raised position, in which it is held in place by a releasable retaining device, and a lowered position, in which it is vertical and defines a beam that, in use, supports the cargo tray in relation to the lower bottom surface (32) of the trunk (4).

## Patentansprüche

1. Bewegliche Laderaumwanne (1) für einen Kofferraum (4) eines Kraftfahrzeugs (5), wobei die Laderaumwanne Folgendes umfasst:
- eine erste Platte (8), die eine Oberseite (9) definiert, auf der Gegenstände abgelegt werden können;
- einen Greifabschnitt (33, 35), den ein Nutzer ergreifen kann, um die Laderaumwanne (1) in dem Kofferraum (4) anzuheben und/oder zu rangieren;
- mindestens zwei Halteelemente (20), die zwischen einer herausgezogenen Position, in der sie in einer freitragenden Weise hervorstehen, um während des Gebrauchs relative Haltesitze (26) in Eingriff zu nehmen, und einer eingeschobenen Position, in der sie während des Gebrauchs die Haltesitze (26) frei verlassen, bewegt werden können; wobei die Bewegungen der Halteelemente (20) aus der herausgezogenen Position in die eingeschobene Position zusammen durch eine Bewegung des Greifabschnitts (33, 35) gesteuert werden;
**dadurch gekennzeichnet, dass** die Halteelemente (24) durch Flügel definiert werden, die parallel zu der ersten Platte (8) verlaufen und entlang gegenüberliegender Seiten der Laderaumwanne (1) angeordnet sind und in der herausgezogenen Position auf Unterseiten der Sitze (26) ruhen, um das Tragen der Lasten zu unterstützen, die durch die Oberseite (9) aufgenommen werden.

2. Laderaumwanne nach Anspruch 1, **dadurch gekennzeichnet, dass** sie eine Kraftübertragung (37) umfasst, um die Bewegung des Greifabschnitts (33, 35) zu den Flügeln (20) zu übertragen; wobei die Kraftübertragung vollständig unter der ersten Platte (7) angeordnet ist.

3. Laderaumwanne nach Anspruch 2, **dadurch gekennzeichnet, dass** sie eine zweite Platte (7) umfasst, die an der ersten Platte (8) befestigt und darunter angeordnet ist; wobei die Kraftübertragung (37) zwischen der ersten und der zweiten Platte (8, 7) angeordnet ist.

4. Laderaumwanne nach Anspruch 2 oder 3, **dadurch gekennzeichnet, dass** der Greifabschnitt (33, 35) um eine Achse (36) in Bezug auf die erste Platte (8) aus einer Ruheposition in Richtung einer Freigabeposition geschwenkt werden kann, um die Flügel (20) zu veranlassen, sich zurückzuziehen.

5. Laderaumwanne nach Anspruch 4, **dadurch gekennzeichnet, dass** die Kraftübertragung (37) mindestens eine Stange (38) umfasst, die an einem ihrer Enden mit dem Greifabschnitt (33, 35) in einer Position gekoppelt ist, die in Bezug auf die Achse (36) exzentrisch ist.

6. Laderaumwanne nach Anspruch 5, **dadurch gekennzeichnet, dass** der Greifabschnitt (33, 35) eine Basis (35) umfasst, die an der ersten Platte (8) um die Achse (36) herum angelenkt ist, und einen Handgriff (33) umfasst, der mit der Basis (35) gekoppelt ist und in Bezug auf die Basis (35) zwischen einer erhöhten Position und einer abgesenkten Position bewegt werden kann.

7. Laderaumwanne nach Anspruch 6, **dadurch gekennzeichnet, dass** der Handgriff (35) in der abgesenkten Position in einer Aussparung (34) unter der Oberseite (9) untergebracht ist.

8. Laderaumwanne nach Anspruch 3, **dadurch gekennzeichnet, dass** die Flügel (20) zwischen der ersten und der zweiten Platte (8, 7) angeordnet sind.

9. Laderaumwanne nach einem der vorangehenden Ansprüche, **dadurch gekennzeichnet, dass**, wenn sie in der herausgezogenen Position angeordnet ist, jeder der Flügel Folgendes umfasst:
- einen inneren Abschnitt (24), der in einem Gehäuse (22) angeordnet ist, das darüber durch die erste Platte (8) definiert wird, und
- einen äußeren Abschnitt (25), der mit Bezug auf die erste Platte (8) hervorsteht.

10. Laderaumwanne nach einem der vorangehenden Ansprüche, **dadurch gekennzeichnet, dass** die erste Platte (8) ein vorderes Ende (11) umfasst, das lateral mit zwei gegenüberliegenden Fortsätzen (13) endet.

11. Laderaumwanne nach einem der vorangehenden Ansprüche, **dadurch gekennzeichnet, dass** die Flügel (20) an ihren vorderen Enden an einem vorderen Ende (11) der ersten Platte (8) angelenkt sind, um um jeweilige Achsen (21) orthogonal zu der ersten Platte (8) zwischen der herausgezogenen und der eingeschobenen Position herum zu schwenken.

12. Laderaumwanne nach einem der vorangehenden Ansprüche, **dadurch gekennzeichnet, dass** sie ein Stützelement (29) umfasst, das sich unter der ersten Platte (8) befindet und um etwa 90° zwischen einer erhöhten Position, in der es durch eine lösbare Haltevorrichtung gehalten wird, und einer abgesenkten Position, in der es vertikal steht und einen Träger definiert, der während des Gebrauchs die Laderaumwanne in Bezug auf den Boden (32) des Kofferraums (4) stützt, geschwenkt werden kann.

## Revendications

1. Plateau porte-charge mobile (1) pour un coffre (4) d'un véhicule à moteur (5), le plateau porte-charge comprenant :
un premier panneau (8) définissant une surface supérieure (9) sur laquelle des objets peuvent être placés ;
une partie de prise (33, 35) qu'un utilisateur peut prendre pour soulever et/ou manoeuvrer le plateau porte-charge (1) dans le coffre (4) ;
au moins deux éléments de retenue (20), qui sont mobiles entre une position extraite, dans laquelle ils font saillie en porte-à-faux pour mettre en prise, pendant l'utilisation des sièges de retenue (26) relatifs, et une position rétractée dans laquelle ils laissent, pendant l'utilisation lesdits sièges de retenue (26) libres ; les mouvements desdits éléments de retenue (20) de la position extraite à la position rétractée étant commandés ensemble par un mouvement de ladite partie de prise (33, 35) ;
**caractérisé en ce que** lesdits éléments de retenue (20) sont définis par des ailes parallèles audit premier panneau (8) et agencés le long des côtés latéraux du plateau porte-charge (1) et, dans la position extraite, reposent sur des surfaces inférieures desdits sièges (26) afin d'aider à supporter les charges supportées par ladite surface supérieure (9).

2. Plateau porte-charge selon la revendication 1, **caractérisé en ce qu'**il comprend une transmission (37) pour transférer le mouvement de ladite partie de prise (33, 35) auxdites ailes (20) ; ladite transmission étant complètement agencée sous ledit premier panneau (7).

3. Plateau porte-charge selon la revendication 2, **caractérisé en ce qu'**il comprend un second panneau (7) qui est fixé sur et au-dessous dudit premier panneau (8) ; ladite transmission (37) étant agencée entre lesdits premier et second panneaux (8, 7).

4. Plateau porte-charge selon la revendication 2 ou 3, **caractérisé en ce que** ladite partie de prise (33, 35) peut pivoter autour d'un axe (36) par rapport audit premier panneau (8) d'une position de repos vers une position de libération pour permettre la rétraction desdites ailes (20).

5. Plateau porte-charge selon la revendication 4, **caractérisé en ce que** ladite transmission (37) comprend au moins une tige (38) couplée, au niveau de l'une de ses extrémités, à ladite partie de prise (33, 35) dans une position qui est excentrique par rapport audit axe (36).

6. Plateau porte-charge selon la revendication 5, **caractérisé en ce que** ladite partie de prise (33, 35) comprend une base (35) articulée par rapport audit premier panneau (8) autour dudit axe (36), et une poignée (33) couplée à ladite base (35) et mobile par rapport à ladite base (35) entre une position levée et une position abaissée.

7. Plateau porte-charge selon la revendication 6, **caractérisé en ce que** ladite poignée (35), dans la position abaissée, est logée dans un évidement (34) au-dessous de ladite surface supérieure (9).

8. Plateau porte-charge selon la revendication 3, **caractérisé en ce que** lesdites ailes (20) sont agencées entre lesdits premier et second panneaux (8, 7).

9. Plateau porte-charge selon l'une quelconque des revendications précédentes, **caractérisé en ce que**, lorsqu'elle est agencée dans la position extraite, chacune desdites ailes comprend :
une partie interne (24) agencée dans un logement (22) défini de manière supérieure par ledit premier panneau (8), et
une partie externe (25) qui fait saillie par rapport audit premier panneau (8).

10. Plateau porte-charge selon l'une quelconque des revendications précédentes, **caractérisé en ce que** ledit premier panneau (8) comprend une extrémité frontale (11) qui se termine latéralement avec deux appendices (13) opposés.

11. Plateau porte-charge selon l'une quelconque des revendications précédentes, **caractérisé en ce que** lesdites ailes (20) sont articulées au niveau de leurs extrémités frontales, par rapport à une extrémité frontale (11) dudit premier panneau (8), afin de pivoter autour des axes (21) respectifs orthogonaux audit premier panneau (8) entre lesdites positions extraite et rétractée.

12. Plateau porte-charge selon l'une quelconque des revendications précédentes, **caractérisé en ce qu'**il comprend un élément de support (29) positionné sous ledit premier panneau (8) et pouvant pivoter sur environ 90° entre une position levée dans laquelle il est maintenu en place par un dispositif de retenue libérable, et une position abaissée dans laquelle il est vertical et définit une poutre qui pendant l'utilisation supporte le plateau porte-charge par rapport à la surface de fond inférieure (32) du coffre (4).
